(19) Europäisches Patentamt
European Patent Office
Office européen des brevets

(11) **EP 1 989 653 B1**

(12) **EUROPEAN PATENT SPECIFICATION**

(45) Date of publication and mention
of the grant of the patent:
**31.07.2013 Bulletin 2013/31**

(51) Int Cl.:
***G06F 21/79*** *(2013.01)*   ***G06F 21/80*** *(2013.01)*
***G06F 21/62*** *(2013.01)*

(21) Application number: **07704275.2**

(86) International application number:
**PCT/EP2007/050952**

(22) Date of filing: **31.01.2007**

(87) International publication number:
**WO 2007/099012 (07.09.2007 Gazette 2007/36)**

(54) **UNIVERSAL SERIAL BUS (USB) STORAGE DEVICE AND ACCESS CONTROL METHOD THEREOF**

SPEICHEREINRICHTUNG FÜR USB (UNIVERSAL SERIAL BUS) UND
ZUGANGSKONTROLLVERFAHREN DAFÜR

DISPOSITIF DE STOCKAGE DE BUS SÉRIE UNIVERSEL (USB) ET PROCÉDÉ DE CONTRÔLE
D'ACCÈS DE CELUI-CI

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.02.2006 CN 200610051481**

(43) Date of publication of application:
**12.11.2008 Bulletin 2008/46**

(73) Proprietor: **International Business Machines
Corporation
Armonk, NY 10504 (US)**

(72) Inventors:
 • **CHAI, Haixin
  Haidian District Beijing 100085 (CN)**
 • **LU, Sheng
  Haidian District Beijing 100094 (CN)**

(74) Representative: **Gascoyne, Belinda Jane
IBM United Kingdom Limited
Intellectual Property Department
Hursley Park
Winchester,
Hampshire SO21 2JN (GB)**

(56) References cited:
**US-A1- 2005 216 639**

**Description**

FIELD OF THE INVENTION

The present invention relates to a USB (Universal Serial Bus) storage device and an access control method thereof.

DESCRIPTION OF THE RELATED ART

Today, USB disks are widely used for carrying and transferring mass data between computers. Someone even uses USB disk as a primary storage. Thus, many data are stored in USB disks, and some of them are critical.

Users of USB disks also keep the USB disks as backup storage. A great deal of documents, programs and applications are stored in USB disks. But current USB disks do not provide an embedded access control, and they are just simple storage devices. Even the types of file systems of USB disks are determined by operating systems. Such file system types include FAT (File Allocation Table), FAT32, New Technology File System (NTFS), ext2 (Second Extended File System), ext3 (Third Extended File System), etc. Some of these file systems do not support the access control, such as FAT32. Some other file systems can provide an access control function, but when a USB disk with such a file system is mounted to another computer, a privilege user of the new host can access any data of the USB disk.

Confidential information in USB disks may be protected by disk password and cryptographic approaches (There are many types of encryption USB disks available). But in many cases, we do not care that others read our information stored in USB disks, and we just do not want unexpected write operations, such as virus infection. Sometimes, a USB disk stores several Gigabytes of backup data. But when the disk is connected to a friend's computer, all executable programs and office documents are infected by virus, and all of the backup data are destroyed. Occasionally, we may lend our USB disks to friends, but when we get our disks back, we find that some data we kept in the disk are lost due to careless operations.

Thus, disk level access control (encryption and write-protection) of USB disks is not enough in many cases. File level access control may be more flexible and more useful. However, current USB disks do not provide the file level access control because of their implementation methods. Some extensions and key components will be needed to meet such a requirement.

Beside USB disks, some other storage devices also support the USB as their data transferring interface, such as flash based USB keys, portable media players, MP3 players, digital still cameras, and the like. All of these devices can be named as USB storage devices.

Some earlier USB storage devices, such as digital cameras and MP3 players, use their own format to exchange data. But now, many USB storage devices use mass storage device standard (USB mass storage class specification), and their storage devices could be accessed by hosts as another hard disk or floppy disk. Some types of the USB storage devices may not require the file level access control severely, such as flash based USB keys, and their disk sizes are usually less than 1 Gigabytes and they cannot keep a great deal of data. But some USB disks may be larger than several hundred of Gigabytes, and a file system without the access control (e.g. an old FAT and FAT32 file system) may cause a virus epidemic. Furthermore, digital cameras may also require the access control, because the owners of the cameras may want to protect some photos stored in the cameras when they lend their camera to friends.

It can be seen that, current USB storage devices either do not have a mechanism of access control completely, or apply a uniform access control to entire disks (disk level access control), but can not realize a more flexible access control in which some data are protected while accesses to the other storage spaces are permitted.

US2005/0216639 provides a USB storage device which stores both data and executable client software. When the USB storage device is connected to a host computing device applications stored on the USB device can be executed on the host computing device without being installed on the host device.

The storage device includes a security interface for validating a user's authorisation to access these applications. The USB device is intended and designed for use by a single person, the owner of the USB device and an access control is at the disk level of granularity with allowable actions on user data being defined in acces control lists stored with the user data.

SUMMARY OF THE INVENTION

It is an object of the invention to provide a USB storage device and an access control method thereof capable of performing an access control in a finer granularity than disk level access control.

According to an aspect of the invention, there is provided an access control method of a USB storage device comprising providing an access control module on said USB storage device; dividing the storage space on said USB storage device into a plurality of data storage entities; setting the access right of each user to each data storage entity;

storing said access rights on said USB storage device as an access right list; when a user issues an access request for a data storage entity on said USB storage device through a host connected with said USB storage device via a USB interface, querying said access right list by said access control module, so as to determine whether the user has an access right to the requested data storage entity; and denying the user's access request for the data storage entity when the user does not have the access right to the data storage entity, and permitting the user's access request for the data storage entity when the user has the access right to the data storage entity.

The process between the USB storage device's being connected with a USB host and its being disconnected from the USB host is one session; when a session is established, the user provides authentication information for the USB device to authenticate him/her and saves the user information used in the current session. Preferably, it is also determined whether the user has a right to access the USB storage device according to a valid user table on the USB storage device, and the user's access request is denied in the case that he/she does not have the access right..

According to another aspect of the invention, there is provided a USB storage device comprising a data storage media; a mapping means for mapping the logical address segments on the data storage media into data storage entities; an access right setting means for setting each user's access right to each data storage entity, and storing said access rights on the data storage media as an access right list; an access control module which, when a user issues an access request for the data storage entity on said data storage media through a host connected with said USB storage device via a USB interface, queries said access right list, so as to determine whether the user has the access right to the requested data storage entity, wherein said access control module denies the access request of the user for the data storage entity when the user does not have the access right to the data storage entity, and permits the access request of the user for the data storage entity when the user has the access right to the data storage entity.

Since the access rights are set for the respective data storage entities divided on the data storage media respectively, a finer access control than the disk level access control can be achieved, and even a file level access control can be achieved. Thus, different access controls can be employed for different files and storage spaces on the USB storage device.

BRIEF DESCRIPTION OF THE DRAWINGS

Fig.1 is a schematic diagram showing reserving a part of sectors on a data storage media of a USB storage device for storing an access control list (ACL);

Fig.2 shows a flow chart of a basic authentication process;

Fig. 3 shows a flow chart of a basic access control process;

Fig. 4 is a schematic diagram showing the data storage media of the USB storage device divided into a plurality of partitions with ACL stored in one partition;

Fig. 5 shows a schematic diagram of a way in which the USB storage device interacts with a host computer in a third implementation method example; and

Fig. 6 shows respective components in the USB storage device of a preferred embodiment of the invention.

DESCRIPTION OF THE PREFERRED EMBODIMENTS

In this disclosure, we will give some key components for implementing a file level access control in a USB storage device. These component extensions do not need users to pay attention to the management of USB disks management. Users only need to set an authentication method for the USB storage device, and pass the authentication when the USB storage device is connected to a computer. Some access control methods of operating systems may be employed directly, and users do not need to know that the USB storage device is a standalone portable disk. This mechanism of file level access control for USB storage devices may work in Microsoft™ Windows™ series and UNIX™ based operating systems, as well as other operating systems, such as MacOS. (Microsoft and Windows are registered trademarks of Microsoft Corporation in the United States, other countries, or both. Unix is a registered trademark of The Open Group, in the United States and other countries).

An access control method of the USB storage device according to a preferred embodiment of the invention will be described below with reference to the attached drawings.

USB storage devices are those devices which store data and are connected with hosts (USB hosts) via USB interfaces. No matter what implementation methods are employed by USB storage devices, current USB storage devices follow the USB mass storage class specification. Although USB mass storage class specification defines the transferring and control methods in detail, we will only discuss the address mechanism thereof here.

Data in USB storage devices can be accessed by operating systems through logical addresses. The logical address consists of head, track, cylinder and sector. The actual meaning of address information is related to the types of storage devices defined by SubClass codes. With the information, operating systems can access the data in USB disks as in hard disk, floppy disk, CDROM, tape, and so on, and can format the USB storage devices into any format they support.

Such a USB storage access method makes it easy for operating.systems to access USB storage devices with their file system sub-systems. But it is difficult to implement a standalone access control mechanism without any extension.

First, several possible ways of providing file level access control in USB storage devices are described.

Implementation method example 1: Sector based access control

1.1 Addressing and access control list (ACL) storing

Devices and operating systems which support the USB mass storage class specification exchange data address information in head, track, cylinder and sector or other structure (As for tapes, QIC-157 command block is used).

Here, we employ head, track, sector as an example of the logical address. Such an address is defined for UFI (USB Floppy Interface) to calculate LBA (Logical Block Address). Addresses for other specifications will be different, but the basic concept will not change.

No matter how the storage device is formatted, the file system will be constructed into multiple blocks. Block is a logical concept in file system, but it is always related to addresses on the storage device. As for UFI, the block must be equal to or larger than a sector, because the sector is the smallest unit for calculating LBA.

$$LBA=(((Track*HeadTrk)+Head)*SecTrk)+(Sector-1)$$

HeadTrk is the number of heads on each track, and SecTrk is the number of sectors on each track.

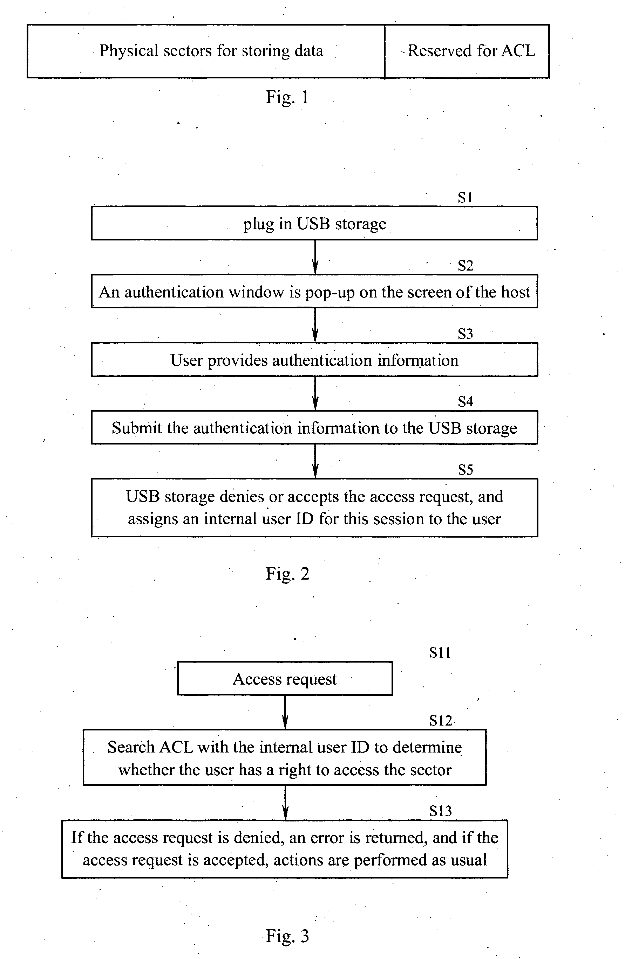

So, in the USB storage device, a sector based ACL can be established and stored in some special sectors. As shown in Fig. 1, on the data storage media, in addition to the sectors for storing data, a part of sectors are reserved for storing the ACL.

In this example, the objects in the ACL are sectors. A subject table (a valid user table in which user names and their authentication information are saved) will also be kept. For each of the objects (sectors), each subject's right of accessing the object will also be stored. The ACL is the relationship between the subjects and the objects.

1.2 Authentication and access control

When a USB storage device is connected to a computer, the user name and password may be required to be input for authentication. If the user cannot pass the authentication, he can access nothing. If he provides correct authentication, information, all continuous access actions during this session are performed as the user's actions. Then, it is judged whether the user has an access right to the requested sector. The user can access files if he has the access right. Otherwise, his access request will be denied by the storage device itself (instead of the operating system). Such an access denial may be implemented by returning a reading or writing error.

Moreover, in the judgment process described above, the valid user table is queried based on the user information, and the valid user used during this USB access session is obtained. Said access session is the process between the USB storage device being connected to a host and being disconnected from the host. The user information obtained when the USB storage device is connected with the host is invalidated when the USB storage device and the host is disconnected.

Each user can be considered to have a full access right to all empty sectors. For newly written sectors, a default access control may be set for a given user. For example, newly written user data can be read or written by other users or can be only read by the other users. If an operation is performed on a sector which has already been written, the storage device will check the ACL to determine whether the user has been authorized to perform the operation. Fig. 2 shows a flow chart of a basic authentication process, and Fig.3 shows a flow chart of a basis access control process.

The authentication process shown in Fig.2 is described below. First, in step S1, the USB storage device is plugged into a host via a USB interface. Then, in step S2, an authentication window is popped up on the screen of the host. In step S3, a user provides his authentication information in the authentication window. In step S4, the authentication information provided by the user is submitted to the USB storage device by the authentication window. Subsequently, in step S5, the USB storage device judges whether the access request of the user should be denied or accepted based on the authentication information of the user stored on its data storage media. Further, when the access request is accepted, an internal user identifier (ID) (i.e. an access control subject identifier) for this session is assigned to the user.

In the access control process shown in Fig.3, after determining that the user has passed the authentication process shown in Fig.2, in step S12, with respect to the access request issued by the user (step S11), the ACL is searched to determine whether the user has the right to access the requested sector by utilizing the user authentication information, such as the internal user ID assigned to the user. Then, in step 513, if the access request is denied, an error is returned. If the access request is accepted, the access operation is performed as usual.

The default user access control mechanism may be defined in some very simple ways. Role based access control may or may not be needed.

Because the USB storage device must handle the access control by itself, there must be a function module to handle the access control check, so as to decide whether this user action has been granted. Such a function module may be a processor which can reside on a chip or a circuit. It may be a new chip or only a segment of codes for existing processors.

The access control module only knows the sector and other logical address information, and does not know the territory of files. In this example, some simple access control mechanisms can be realized. For example, only a privilege user of the USB storage device can access any data and create new users; users can not change the user policy by himself, and so on.

1.3 Setting access control

As described hereinbefore, only a simple access control mechanism is needed. ACL is automatically created based on user policy profiles by the access control module, so only the subject table and the user policy profiles are needed.

In order to store the subject table and the user policy profiles in the USB storage device to avoid operating system decoys, a new interface may be defined to set the information. A possible way is to extend the specification of USB mass storage class. Another way is to store the subject table and the user policy profiles as files in special sectors. These sectors are locked to any user except the privilege user of the USB storage device. The privilege user of the USB storage device may access the subject table and the user policy profiles as files in a special partition, or access them using a special tool.

In a short term, there are some choices to define new users and their policy profiles, but these choices may not break current USB mass storage class specification.

The most important advantage of this example is that it is compatible with the USB mass storage class specification, and new USB storage devices can be recognized by some operating systems directly.

Other advantages include: it also supports any file system format; operating systems do not need to take care of the implementation of the ACL.

Implementation method example 2: Access control of partition

In the previous example, the ACL may become very large. To reduce the size of the ACL, one possible method is to use a partition as the granularity of objects instead of using a sector. Any others aspects are the same as the above example except the calculation of the access control; and the granularity of objects is a partition, instead of a sector.

When the USB storage device receives an access request, it can calculate the requested logical address, and map it from the raw format to a partition. Then, the ACL is checked to determine whether the request is permitted. If the request is denied, an error will be returned to the operating system.

Partition information can be created when the first time the disk is formatted. The formatting can be performed by the storage device manufacturer.

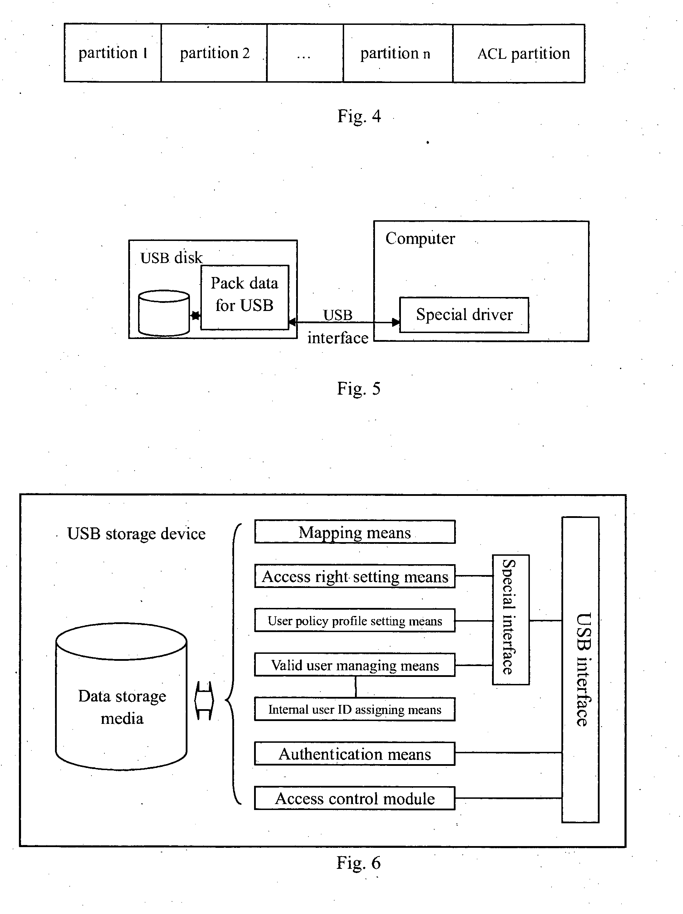

The ACL may be stored in a standalone partition (ACL partition), as shown in Fig.4, and the right to the partition is set to only permit the privilege user of the USB storage device to perform reading and writing. At the same time, the access rights of respective users to the respective other partitions (partition 1, partition 2, ..., partition n) are stored in the ACL standalone partition.

The implementation example has several advantages. First, it inherits all of the advantages of the previous example. Second, it can support larger USB disks, because the number of ACL entries will only be a few lines. Third, it can control the writing action on empty sectors, because all sectors are included in one segment, therefore the user profiles will be much simpler.

The disadvantages of the example include that it cannot define an access control granularity as good as the file level, and actually it is a partition level access control.

Implementation method example 3: Encapsulated access control

Both of the previous two examples are compatible with the current USB mass storage class specification, but they both map files to logical addresses (blocks or sectors). Neither of them knows the boundary of a given file, because they just interpret action requests from the operating system. If we need semantic information of files, the USB mass storage class specification and the USB storage device itself need to be extended.

In this example, the USB storage device can be a standalone storage device with its own file system format. It can be any file system that supports access control, such as NTFS, ext2, etc. And, the storage device is formatted before sold to customers.

After the storage device is connected to a computer via a USB interface, the operating system will exchange information with the disk through a self-defined protocol and customized device drivers.

Fig. 5 shows a schematic diagram of a way in which the USB storage device interacts with a host computer in this implementation method example. The USB storage device is connected to the host computer via the USB interface. The data from the storage media are packed on the USB storage device so as to be supplied to the host computer via the USB interface. A special driver provided on the host computer unpacks the data from the USB storage device.

For example, the Server Message Block (SMB) protocol can be used to transfer data and file system structures and encapsulate them in a USB. protocol. After it is unpacked by the driver, the operating system can handle them with their virtual file system sub-system, because the SMB can be well supported.by Windows series and Linux™ operating systems. (Linux is a registered trademark of Linux Torvalds, in the United States and other countries).

In this example, since a file system is provided on the USB storage device, the USB storage device can know the start addresses and the end addresses (i.e. a set of physical addresses) of files stored thereon, thereby the granularity of performing the access control can be set to file. The access rights of respective users to the respective files are stored on the storage device as the ACL. The aspects of authentication, access control and so on are also the same as those of the first example, and just the granularity of objects is the storage area of an entire file, instead of a sector.

An advantage of the example is that it can support more complex access control policies, such as the role based access control policy. But the USB storage device is actually an alien computer to the host to which it is connected. The host cannot handle the USB storage device as it handles other USB storage devices. And, its requirement of a special driver is another problem. However, none of these problems is a technical problem, in other words, these problems can be solved by those skilled in the art, and just some new elements are needed to be introduced at the time of usage. These contents will not be described in detail here, since they do not relate to the essence of the invention.

Although the detailed embodiments of the invention are given in the above examples with reference to attached drawings, it's still possible for those skilled in the art to mkae various changes or modifications without departing from the essence and the scope of the invention. For example, one may use a challenge-response mechanism for authentication, instead of the user-password scheme.

Several key points as follows in the concept of the invention are described in the above examples :

◇ Access control module, which resides in the USB storage device, performs the access control checks, and returns results of the check to the host. The module may be a standalone chip or a circuit, or just a segment of codes stored in the USB storage device and executed on a processor.

◇ Access control list (ACL), which is stored in some particular position in the USB storage device, and can be in any format.

◇ Authentication, the host may require the user to provide authentication information while the USB storage device is plugged into the host.

◇ Message exchange mechanism, which exchanges the authentication, information between the host and the USB storage device. It may be an extension of the USB storage class specification, or just use the specification directly, or use other protocols encapsulated by the USB protocol.

Three examples of implementing the invention have been described hereinbefore. In the following, a more systematic and thorough description is made to the USB storage device and the access control method thereof of the preferred embodiment of invention with reference to Fig. 6.

Fig. 6 shows respective components in the USB storage device of the preferred embodiment of the invention, by way of example. As shown in Fig. 6, the USB storage device according to the embodiment includes an information storage media, an access control module, a mapping means, an access right setting means, an authentication means, a valid user managing means, an internal user identifier (ID) assigning means, a user policy profile setting means, and a special interface. What is shown in Fig. 6 is an exemplary structure for implementing the access control of the invention.

According to the description herein, those skilled in the art can completely think of many other implementation structures to implement the access control methods of the present invention.

As described above, to perform the access control, the access control module must be provided on the USB storage device. In this way, the access control can be performed independent of the operating system of the host. The access control module may be a standalone chip newly added to the USB storage device, or may be realized by executing corresponding codes stored in the USB storage device by an existing processor of the USB storage device.

In order to facilitate the access control management, the storage space of the data storage media on the USB storage device is divided into at least one data storage entity. This can be achieved by providing the mapping means on the USB storage device. The mapping means maps logical address segments on the data storage media into data storage entities. The data storage entity mentioned here may be a basic storage unit such as a sector on the data storage media of the USB storage device, as described in the above implementation method example 1; or a larger logical block divided manually, such as a partition, as described in the above implementation method example 2. That is, the mapping means maps a sector or a partition on the data storage media into the data storage entity which is the unit of performing the access control in the invention. Alternatively, a file system operating means (not shown in the figure) may be provided on the USB storage device, thereby providing a file system on said USB storage device. This file system describes a set of physical addresses occupied by respective files stored in the data storage media. Thus, the USB storage device can know the boundaries of the files, and accordingly, the storage space on the data storage media which is occupied by each file can be regarded as one data storage entity, as described in the above implementation method example 3.

To control users' access to the USB storage device, the invention set some valid users firstly, and then set access rights of the respective valid users to the respective data storage entities.

By the valid user managing means, valid users who have rights to use the USB storage device can be added or deleted, and authentication information of the valid users is stored on the data storage media of the USB storage device, thereby forming a valid user table (i.e. an access control subject table). The authentication herein can have a plurality of concrete forms, such as usernames plus passwords, and so on, or other data that can represent the users.

The internal user ID assigning means assigns an internal user ID, i.e. an internally-used access control subject identifier, to each valid user. During the operation of the USB storage device, the valid user is represented by the internal user ID. The assignment of the internal user ID can be implemented by adding an internal user ID entry for each valid user in the valid user table.

The access right setting means sets the access right of each valid user to each data storage entity based on the internal user IDs of the valid users, and stores said access right in the data storage media as an access right list. The access right list herein is an important component part of the access control list (ACL) mentioned in previous examples. The access right includes whether it is readable, and whether it is writable. Accordingly, means for setting respectively whether a read and/or write operation can be perform on the data storage entity for each valid user may be included in the access right setting means.

Furthermore, user policy profiles can be set by the user policy profile setting means and stored in the data storage media. Here, the user policy profiles illustrate rules of setting access rights for users in various cases. The user policies may include policies related to default access rights to empty data storage entities, policies related to default access rights to newly written data storage entities, and other similar policies. Accordingly, means for setting these policies (not shown in the figure) may be respectively included in the user policy profile setting means.

Thus, in addition to directly setting the access rights by a privilege user through the access right setting means, in the process that a valid user uses the USB disk, the access right setting means may also automatically set access rights of the respective valid users to the data storage entity accessed by the user who is using the USB storage device according to related operations of the user with reference to the user policy profiles and the valid user table, thereby updating the access right list. For example, as a user policy, it can be set that all valid users have full access rights to empty storage spaces, or only some particular valid users can access the empty storage spaces. Again, for example, it can be set that some users have access rights to read and/or write data storage entities newly written by a certain user.

It can be seen from the above description that, all of the valid user managing means, the user policy profile setting means and the access right setting means need to interact with users to form a corresponding valid user table (i.e. an access control subject table), user policy profiles and an access right list. Interfaces may be provided for them respectively, and their interfaces may also be integrated. In the figure, one special interface is provided for them uniformly by way of example.

Only the privilege user of the USB storage device can modify the valid user table (i.e. the access control subject table), the user policy profiles and the access right list. This can be achieved by storing the access right list, the valid user table and the user policy profiles in special positions on the data storage media, such as some particular sectors, one particular partition, or particular files. The access rights to such special positions are set such that only the privilege user of the USB storage device can access them to perform modifications. Alternatively, the privilege user of the USB storage device may be provided with a special tool which interfaces with the special interface, so that the privilege user modifies the user valid table, the user policy profiles and the access right list using the special tool.

In the case that the valid user table (i.e. the access control subject table), the user policy profiles and the access right list have been stored in the data storage media of the USB storage device, the access control according to the invention can be performed when a user accesses the USB storage device.

When a user connects the USB storage device to the host via the USB interface and issues an access request for the data storage entity on the data storage media of the USB storage device through the host, the user authentication is firstly performed, and then it is determined whether the user has a right to access the data storage entity.

To perform the user authentication, the authentication means need to acquire the authentication information provided by the user. There are many ways to acquire the authentication information. For example, an input means can be provided on the USB storage device to receive the authentication information input by the user and provide it to the authentication means. The authentication means may also send interface data to the host in response to the access request issued by the user, so as to generate an authentication interface on the host for the user to input the authentication information, and return the authentication information input by the user to said authentication means. Alternatively, it is also possible to make the host used by a user corresponding to the user, obtain certain information that is specific to the host or particular information stored in the host by the user directly from the host, and treat it as the authentication information provided by the user to represent the user. Here, the authentication information can be information like, usernames, passwords, and so on, and it can also be any other information that may uniquely represent the user.

After obtaining the authentication information, the authentication means queries the valid user table stored on the data storage media based on the authentication information provided by the user to determine whether the user is a valid user. When it is determined that the user is not a valid user, any access request from the user is denied.

After the user passes the authentication, the access control module queries the access right list based on the internal user identifier of the user, so as to determine whether the user has an access right to the data storage entity he or she requested. Said access control module denies the user's access request for the data storage entity when the user does not have the access right to the data storage entity, and permits the user's access request for the data storage entity when the user has the access right to the data storage entity.

As described above, when the user accesses the data storage entity, the user right setting means can also set the access rights to the data access entities respectively for all valid users in the valid user table according to the user policy profiles, thereby updating the access right list.

So far, the USB storage device and the access control method thereof have been described in detail, wherein since access rights are set for respective data storage entities divided on the data storage media respectively, an access control that is finer than the disk level control access can be achieved, and even the file level access control can be achieved.

The respective means mentioned herein may be a chip or a circuit separately provided on USB storage devices, and they may also be integrated to one chip, alternatively, the respective means mentioned herein can be implemented by executing different code segments by a processor provided on USB storage devices.

Although the invention has been shown and described above in detail with reference to its preferred embodiments, those skilled in the art should understand that various modifications can be made in form and detail therein without departing from the scope of the invention as defined by the following claims.

The scope of the present disclosure includes any novel feature or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

For the avoidance of doubt, the term "comprising", as used herein throughout the description and claims is not to be construed as meaning "consisting only of".

**Claims**

1. An access control method of a Universal Serial Bus (USB) storage device, comprising:

   providing an access control module on said USB storage device; and **characterised by** comprising:

   dividing the storage space on said USB storage device into a plurality of data storage entities;
   setting the access right of each of a plurality of users to each data storage entity;
   storing said access rights on said USB storage device as an access right list;
   when a user issues an access request for a data storage entity on said USB storage device through a host connected with said USB storage device via a USB interface, querying said access right list by said access control modul (S12) so as to determine whether the user has an access right to the requested data storage entity; and

denying the user access request for the data storage entity by said access control module when the user does not have the access right to the data storage entity, and permitting the user access request for the data storage entity when the user has the access right to the data storage entity (S5, S13).

2. The access control method of claim 1, further comprising:

when the USB storage device is connected with the host (S1), sending interface data from the USB storage device to the host to generate an authentication interface on the host for the user to input authentication information (S2), and providing the authentication information input by the user to said USB storage device (S3, S4), so that said USB storage device determines whether the user has a right to use the USB storage device.

3. The access control method of claim 2, **characterized in that**, the user information obtained when the USB storage device is connected with the host is invalidated when the USB storage device and the host is disconnected.

4. The access control method of any preceding claim, further comprising:

storing the authentication information of valid users that have rights to use the USB storage device on the USB storage device, thereby forming a valid user table;

before querying said access right list, querying said valid user table by the USB storage device based on the authentication information provided by the user issuing said access request, so as to determine whether the user is a valid user; and

when it is determined that the user is not a valid user, denying any access request of the user by said USB storage device.

5. The access control method of claim 4, further comprising:

assigning an internal user identifier to each valid user,

wherein said access control module queries the access right list based on the internal user identifier of the user.

6. The access control method of claim 4 or 5, further comprising:

storing user policy profiles in said USB storage device, said user policy profiles illustrating the rules of setting access rights for users in various cases.

7. The access control method of claim 6, said user policy profiles comprise at least one of policies related to default access rights to empty data storage entities and policies related to default access rights to newly written data storage entities.

8. The access control method of claim 6 or 7, **characterized in that**, during the process of using said USB storage device, automatically setting the access rights of the respective valid users to the accessed data storage entity based on the valid user table and the user policy-profiles.

9. A Universal Serial Bus (USB) storage device, comprising:

a data storage media; and **characterised by** comprising:

a mapping means for mapping the logical address segments on the data storage media into data storage entities;

an access right setting means for setting the access right of each of a plurality of users to each data storage entity, and storing said access rights in said data storage media as an access right list; and

an access control module which, when a user issues an access request for a data storage entity on said data storage media through a host connected with said USB storage device via a USB interface, queries said access right list, so as to determine whether the user has an access right to the requested data storage entity,

wherein said access control module denies the user access request for the data storage entity when the user does not have the access right to the data storage entity, and permits the user access request for the data storage entity when the user has the access right to the data storage entity.

10. The USB storage device of claim 9, further comprising:

an authentication means for sending interface data to the host in response to the access request issued by the user so as to generate an authentication interface on the host for the user to input authentication information, and returning the authentication information input by the user to said authentication means, wherein said authentication means determines whether the user has a right to use the USB storage device based on said authentication information.

11. The USB storage device of claim 9 or 10, further comprising:

a valid user managing means for adding or deleting valid users that have rights to use the USB storage device, and storing the authentication information of the valid users on said data storage media as a valid user table; an authentication means which queries said valid user table based on the authentication information provided by the user issuing said access request to determine whether the user is a valid user, and denies any access request of the user when it is determined that the user is not a valid user.

12. The USB storage device of claim 9, 10 or 11, further comprising:

an internal user identifier assigning means for assigning an internal user identifier to each valid user, wherein said access control module queries the access right list based on the internal user identifier of the user.

13. The USB storage device of claim 9, 10, 11 or 12, further comprising:

a user policy profile setting means for setting user policy profiles and storing the user policy profiles in said data storage media, said user policy profiles illustrating the rules of setting the access rights for users in various cases.

14. The USB storage device of claim 13, wherein said user policy-profile setting means comprises at least one of the following:

a means for setting policies related to default access rights to empty data storage entities; a means for setting policies related to default access rights to newly written data storage entities.

15. The USB storage device of claim 13 or 14, **characterized in that**, during the process of using said USB storage device, said access right setting means automatically sets the access rights of the respective valid users to the accessed data storage entity based on the valid user table and the user policy profiles.

**Patentansprüche**

1. Zugangssteuerung-Verfahren für eine Universal-Serial-Bus-(USB-) Speichereinheit, wobei das Verfahren umfasst:

Bereitstellen eines Zugangssteuerung-Moduls auf der USB-Speichereinheit; und **dadurch gekennzeichnet, dass** es umfasst:

Unterteilen des Speicherraums auf der USB-Speichereinheit in einen Vielzahl von Datenspeicher-Einheiten; Festlegen der Zugangsrechte zu jeder Datenspeicher-Einheit für jeden Nutzer aus einer Vielzahl von Nutzern; Speichern der Zugangsrechte auf der USB-Speichereinheit als eine Zugangsrechte-Liste; wenn ein Nutzer eine Zugangsanforderung für eine Datenspeicher-Einheit auf der USB-Speichereinheit über einen Host ausgibt, der mit der USB-Speichereinheit über eine USB-Schnittstelle verbunden ist, Abfragen der Zugangsrecht-Liste durch das Zugangssteuerung-Modul (512), um zu ermitteln, ob der Nutzer ein Zugangsrecht auf die angeforderte Datenspeicher-Einheit besitzt; und Ablehnen der Nutzer-Zugangsanforderung für die Datenspeicher-Einheit durch das Zugangssteuerung-Modul, wenn der Nutzer kein Zugangsrecht für die Datenspeicher-Einheit besitzt, und Erlauben der Nutzer-Zugangsanforderung für die Datenspeicher-Einheit, wenn der Nutzer das Zugangsrecht für die Datenspeicher-Einheit (55, 513) besitzt.

2. Zugangssteuerung-Verfahren nach Anspruch 1, das ferner umfasst:

wenn die USB-Speichereinheit mit dem Host (51) verbunden ist, Senden der Schnittstellendaten von der USB-Speichereinheit an den Host zum Erzeugen einer Identitätsprüfschnittstelle auf dem Host, damit der Nutzer die Identitätsdaten (52) eingibt, und Bereitstellen der durch den Nutzer eingegebenen Identitätsdaten an die USB-Speichereinheit (53, 54), sodass die USB-Speichereinheit ermittelt, ob der Nutzer ein Recht zum Verwenden der USB-Speichereinheit besitzt.

3. Zugangssteuerung-Verfahren nach Anspruch 2, **dadurch gekennzeichnet, dass** die Nutzerdaten, die beim Verbinden der USB-Speichereinheit mit dem Host erhalten werden, für ungültig erklärt werden, wenn die USB-Speichereinheit und der Host getrennt werden.

4. Zugangssteuerung-Verfahren nach einem der vorhergehenden Ansprüche, das ferner umfasst:

Speichern der Identitätsdaten zulässiger Nutzer, die Rechte zum Verwenden der USB-Speichereinheit auf der USB-Speichereinheit besitzen, wodurch eine Tabelle zulässiger Nutzer erzeugt wird;
bevor die Zugangsrechte-Liste abgefragt wird, Abfragen der Tabelle zulässiger Nutzer durch die USB-Speichereinheit auf der Grundlage der Identitätsdaten, die durch den Nutzer bereitgestellt werden, der die Zugangsanforderung ausgegeben hat, um zu ermitteln, ob es sich um bei dem Teilnehmer um einen zulässigen Nutzer handelt; und
wenn ermittelt wird, dass es sich um keinen zulässigen Nutzer handelt, ablehnen jeder Zugriffsanforderung des Nutzers durch die USB-Speichereinheit.

5. Zugangssteuerung-Verfahren nach Anspruch 4, das ferner umfasst:

Zuweisen eines internen Nutzerbezeichners an jeden zulässigen Nutzer, wobei das Zugangssteuerung-Modul die Zugangsrechte-Liste auf der Grundlage des internen Nutzerbezeichners des Nutzers abfragt.

6. Zugangssteuerung-Verfahren nach Anspruch 4 oder 5, das ferner umfasst:

Speichern der Nutzer-Strategieprofile in der USB-Speichereinheit, wobei die Nutzer-Strategieprofile die Regeln zum Festlegen von Zugangsrechten für Nutzer in verschiedenen Fällen veranschaulichen.

7. Zugangssteuerung-Verfahren nach Anspruch 6, wobei die Nutzer-Strategieprofile Strategien, die sich auf voreingestellte Zugangsrechte für leere Datenspeicher-Einheiten beziehen, und/oder Strategien umfassen, die sich auf voreingestellte Zugangsrechte für neu beschriebene Datenspeicher-Einheiten beziehen.

8. Zugangssteuerung-Verfahren nach Anspruch 6 oder 7, **dadurch gekennzeichnet, dass** während der Verwendung der USB-Speichereinheit die Zugangsrechte automatisch für die jeweils zulässigen Nutzer auf der Grundlage der Tabelle zulässiger Nutzer und der Nutzer-Strategieprofile für die Datenspeicher-Einheit festgelegt werden, auf die zugegriffen wird.

9. Universal-Serial-Bus- (USB-) Speichereinheit, die umfasst:

ein Datenspeicher-Medium; und **dadurch gekennzeichnet, dass** es umfasst:

ein Abbildungsmittel zum Abbilden der logischen Adresssegmente auf dem Datenspeicher-Medium auf die Datenspeicher-Einheiten;
ein Zugangsrechte-Festlegungsmittel zum Festlegen der Zugangsrechte jedes Nutzers aus einer Vielzahl von Nutzern für jede Datenspeicher-Einheit, und Speichern der Zugangsrechte in dem Datenspeicher-Medium als eine Zugangsrechte-Liste; und
ein Zugangssteuerung-Modul, das, wenn ein Nutzer eine Zugangsanforderung für eine Datenspeicher-Einheit auf dem Datenspeicher-Medium über einen Host ausgibt, der mit der USB-Speichereinheit über eine USB-Schnittstelle verbunden ist, die Zugangsrechte-Liste abfragt, um zu ermitteln, ob der Nutzer ein Zugangsrecht für die angeforderte Datenspeicher-Einheit besitzt,
wobei das Zugangssteuerung-Modul die Nutzer-Zugangsanforderung für die Datenspeicher-Einheit ablehnt,
wenn der Nutzer kein Zugangsrecht für die Datenspeicher-Einheit besitzt, und die Nutzer-Zugangsanforderung für die Datenspeicher-Einheit erlaubt, wenn der Nutzer das Zugangsrecht für die Datenspeicher-Einheit besitzt.

**10.** USB-Speichereinheit nach Anspruch 9, die ferner umfasst:

ein Identitätsprüfmittel zum Senden von Schnittstellendaten an den Host in Reaktion auf die Zugangsanforderung, die von dem Nutzer ausgegeben wurde,
um eine Identitätsprüfschnittstelle auf dem Host zu erzeugen, damit der Nutzer Identitätsdaten eingibt, und Rückgeben der Identitätsdaten durch den Nutzer an das Identitätsprüfmittel,
wobei das Identitätsprüfmittel auf der Grundlage der Identitätsdaten ermittelt, ob der Nutzer ein Recht zum Verwenden der USB-Speichereinheit besitzt.

**11.** USB-Speichereinheit nach Anspruch 9 oder 10, die ferner umfasst:

ein Verwaltungsmittel zulässiger Nutzer zum Hinzufügen oder Entfernen zulässiger Nutzer, die Rechte zum Verwenden der USB-Speichereinheit besitzen, und Speichern der Identitätsdaten der zulässigen Nutzer auf dem Datenspeicher-Medium als eine Tabelle zulässiger Nutzer;
ein Identitätsprüfmittel, das die Tabelle zulässiger Nutzer auf der Grundlage der Identitätsdaten abfragt, die von dem Nutzer bereitgestellt werden, der die Zugangsanforderung ausgegeben hat, um zu ermitteln, ob es sich um einen zulässigen Nutzer handelt, und das jede Zugangsanforderung des Nutzers ablehnt, wenn ermittelt wird, dass es sich nicht um einen zulässigen Nutzer handelt.

**12.** USB-Speichereinheit nach Anspruch 9, 10 oder 11, das ferner umfasst:

ein Zuweisungsmittel der internen Nutzerbezeichner zum Zuweisen eines internen Nutzerbezeichners an jeden zulässigen Nutzer,
wobei das Zugangs-Steuermodul die Zugangsrechte-Liste auf der Grundlage des internen Nutzerbezeichners des Nutzers abfragt.

**13.** USB-Speichereinheit nach Anspruch 9, 10, 11 oder 12, das ferner umfasst:

ein Festlegungsmittel von Nutzer-Strategieprofilen zum Festlegen der Nutzer-Strategieprofile und Speichern der Nutzer-Strategieprofile in dem Datenspeicher-Medium, wobei die Nutzer-Strategieprofile die Regeln zum Festlegen der Zugangsrechte für Nutzer in verschiedenen Fällen veranschaulichen.

**14.** USB-Speichereinheit nach Anspruch 13, wobei das Festlegungsmittel der Nutzer-Strategieprofile mindestens eines von Folgendem umfasst:

ein Mittel zum Festlegen von Strategien, die sich auf voreingestellte Zugangsrechte für leere Datenspeicher-Einheiten beziehen;
ein Mittel zum Festlegen von Strategien, die sich auf voreingestellte Zugangsrechte für neu beschriebene Datenspeicher-Einheiten beziehen.

**15.** USB-Speichereinheit nach Anspruch 13 oder 14, **dadurch gekennzeichnet, dass** das Festlegungsmittel der Zugangsrechte während der Verwendung der USB-Speichereinheit die Zugangsrechte für die Datenspeicher-Einheit, auf die zugegriffen wird, für die jeweils zulässigen Nutzer auf der Grundlage der Tabelle zulässiger Nutzer und der Nutzer-Strategieprofile automatisch festlegt.

**Revendications**

**1.** Procédé de contrôle d'accès d'une unité de stockage de bus de série universel (USB), le procédé comprenant de :

fournir un module de contrôle d'accès sur ladite unité de stockage USB ; et **caractérisé en ce qu'**il comprend de :

diviser l'espace de stockage sur ladite unité de stockage USB en une pluralité d'entités de stockage de données ;
régler le droit d'accès de chacun d'une pluralité d'utilisateurs sur chaque entité de stockage de données ;
mémoriser lesdits droits d'accès sur ladite unité de stockage USB comme une liste de droit d'accès ;
quand un utilisateur émet une demande d'accès pour une entité de stockage de données sur ladite unité de stockage USB par l'intermédiaire d'un hôte connecté avec ladite unité de stockage USB via une interface USB, interroger ladite liste de droit d'accès par ledit module de contrôle d'accès (512) de manière à déterminer si l'utilisateur a un droit d'accès à l'entité de stockage de données demandée ; et
refuser la demande d'accès d'utilisateur pour l'entité de stockage de données par ledit module de contrôle d'accès quand l'utilisateur n'a pas le droit d'accès à l'entité de stockage de données, et autoriser la demande d'accès d'utilisateur pour l'entité de stockage de données quand l'utilisateur a le droit d'accès à l'entité de stockage de données (55, 513).

2.  Procédé de contrôle d'accès selon la revendication, comprenant en outre de :

    quand l'unité de stockage USB est connectée à l'hôte (51),
    envoyer des données d'interface depuis l'unité de stockage USB à l'hôte afin de générer une interface d'authentification sur l'hôte pour l'utilisateur afin d'entrer une information d'authentification (52) et
    fournir l'information d'authentification entrée par l'utilisateur à ladite unité de stockage USB (53,54) de sorte que ladite unité de stockage USB détermine si l'utilisateur a un droit à utiliser l'unité de stockage USB.

3.  Procédé de contrôle d'accès selon la revendication 2, **caractérisé en ce que** l'information d'utilisateur obtenue quand l'unité de stockage USB est connectée avec l'hôte est invalidée quand l'unité de stockage USB et l'hôte sont déconnectés.

4.  Procédé de contrôle d'accès selon l'une quelconque des revendications précédentes, comprenant en outre de :

    mémoriser l'information d'authentification des utilisateurs valides qui ont des droits pour utiliser l'unité de stockage USB sur l'unité de stockage USB, en formant ainsi une table d'utilisateur valide ;
    avant d'interroger ladite liste de droit d'accès,
    interroger ladite table d'utilisateur valide par l'unité de stockage USB sur la base de l'information d'authentification fournie par l'utilisateur émettant ladite demande d'accès, de manière à déterminer si l'utilisateur est un utilisateur valide ; et
    quand il est déterminé que l'utilisateur n'est pas un utilisateur valide, refuser toute demande d'accès de l'utilisateur par ladite unité de stockage USB.

5.  Procédé de contrôle d'accès selon la revendication 4, comprenant en outre de :

    assigner un identifiant d'utilisateur interne à chaque utilisateur valide,
    dans lequel ledit module de contrôle d'accès interroge la liste de droits d'accès sur la base de l'identifiant d'utilisateur interne de l'utilisateur.

6.  Procédé de contrôle d'accès selon les revendications 4 ou 5, comprenant en outre de :

    mémoriser des profils de politique d'utilisateur dans ladite unité de stockage USB, lesdits profils de politique d'utilisateur illustrant les règles de réglage des droits d'accès pour les utilisateurs dans divers cas.

7.  Procédé de contrôle d'accès selon la revendication 6, dans lequel lesdits profils de politique d'utilisateur comprennent au moins une des politiques relatives à des droits d'accès par défaut à des entités de stockage de données vides et des politiques relatives à des droits d'accès par défaut à des entités de stockage de données récemment écrites.

8.  Procédé de contrôle d'accès selon les revendications 6 ou 7, **caractérisé par**, pendant le processus d'utilisation de ladite unité de stockage USB, le réglage automatique des droits d'accès des utilisateurs valides respectifs à l'entité de stockage de données accédée sur la base de la table d'utilisateur valide et des profils de politique d'utilisateur.

9.  Unité de stockage de bus de série universel (USB), comprenant :

    un support de stockage de données ; et **caractérisé en ce qu'**il comprend :

un moyen de mise en correspondance pour mettre en correspondance les segments d'adresse logique sur le support de stockage de données avec les entités de stockage de données ;

un moyen de réglage de droits d'accès pour régler le droit d'accès de chacun d'une pluralité d'utilisateurs à chaque entité de stockage de données, et mémoriser lesdits droits d'accès dans ledit support de stockage de données comme une liste de droit d'accès ; et

un module de contrôle d'accès qui, quand un utilisateur émet une demande d'accès pour une entité de stockage de données sur ledit support de stockage de données par l'intermédiaire d'un hôte connecté avec ladite unité de stockage USB via une interface USB, interroge ladite liste de droit d'accès, de manière à déterminer si l'utilisateur a un droit d'accès à l'entité de stockage de données demandée,

dans lequel ledit module de contrôle d'accès refuse la demande d'accès d'utilisateur pour l'entité de stockage de données quand l'utilisateur n'a pas le droit d'accès à l'entité de stockage de données, et autorise la demande d'accès d'utilisateur pour l'entité de stockage de données quand l'utilisateur a le droit d'accès à l'entité de stockage de données.

**10.** Unité de stockage de données selon la revendication 9, comprenant en outre :

un moyen d'authentification pour envoyer des données d'interface à l'hôte en réponse à la demande d'accès émise par l'utilisateur de manière à générer une interface d'authentification sur l'hôte pour l'utilisateur afin d'entrer l'information d'authentification, et renvoyer l'information d'authentification entrée par l'utilisateur audit moyen d'authentification,

dans lequel ledit moyen d'authentification détermine si l'utilisateur a un droit d'utiliser l'unité de stockage USB sur la base de ladite information d'authentification.

**11.** Unité de stockage USB selon les revendications 9 ou 10, comprenant en outre :

un moyen de gestion d'utilisateur valide pour ajouter ou supprimer des utilisateurs valides qui ont des droits à utiliser l'unité de stockage USB, et mémoriser l'information d'authentification des utilisateurs valides sur ledit support de stockage de données comme une table d'utilisateur valide ;

un moyen d'authentification qui interroge ladite table d'utilisateur valide sur la base de l'information d'authentification fournie par l'utilisateur émettant ladite demande d'accès afin de déterminer si l'utilisateur est un utilisateur valide, et refuse toute demande d'accès de l'utilisateur quand il est déterminé que l'utilisateur n'est pas un utilisateur valide.

**12.** Unité de stockage USB selon les revendications 9,10 ou 11, comprenant en outre :

un moyen d'assignation d'identifiant d'utilisateur interne pour assigner un identifiant d'utilisateur interne à chaque utilisateur valide,

dans lequel ledit module de contrôle d'accès interroge la liste de droit d'accès sur la base de l'identifiant d'utilisateur interne de l'utilisateur.

**13.** Unité de stockage USB selon les revendications 9, 10, 11 ou 12, l'unité comprenant en outre :

un moyen de réglage de profil de politique d'utilisateur pour régler des profils de politique d'utilisateur et mémoriser les profils de politique d'utilisateur dans ledit support de stockage de données, lesdits profils de politique d'utilisateur illustrant les règles de réglage des droits d'accès pour les utilisateurs dans divers cas.

**14.** Unité de stockage USB selon la revendication 13, dans lequel ledit moyen de réglage de profil de politique d'utilisateur comprend au moins un de ce qui suit :

un moyen de réglage de politiques relatives à des droits d'accès par défaut à des entités de stockage de données vides ;

un moyen de réglage de politiques relatives à des droits d'accès par défaut à des entités de stockage de données récemment écrites.

**15.** Unité de stockage USB selon les revendications 13 ou 14, **caractérisé en ce que**, pendant le processus d'utilisation de ladite unité de stockage USB, ledit moyen de réglage de droit d'accès règle automatiquement les droits d'accès des utilisateurs valides respectifs à l'entité de stockage de données accédée sur la base de la table d'utilisateur valide et des profils de politique d'utilisateur.

| Physical sectors for storing data | Reserved for ACL |
|---|---|

Fig. 1

S1

| plug in USB storage |
|---|

S2

| An authentication window is pop-up on the screen of the host |
|---|

S3

| User provides authentication information |
|---|

S4

| Submit the authentication information to the USB storage |
|---|

S5

| USB storage denies or accepts the access request, and assigns an internal user ID for this session to the user |
|---|

Fig. 2

S11

| Access request |
|---|

S12

| Search ACL with the internal user ID to determine whether the user has a right to access the sector |
|---|

S13

| If the access request is denied, an error is returned, and if the access request is accepted, actions are performed as usual |
|---|

Fig. 3

| partition 1 | partition 2 | ... | partition n | ACL partition |
|---|---|---|---|---|

Fig. 4

USB disk

Data storage: Pack data for USB

Computer

Special driver

USB interface

Fig. 5

USB storage device

Data storage media

Mapping means

Access right setting means

User policy profile setting means

Valid user managing means

Internal user ID assigning means

Authentication means

Access control module

Special interface

USB interface

Fig. 6

16

**EP 1 989 653 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050216639 A